Europäisches Patentamt

**European Patent Office**

**Office européen des brevets**

(19)

(11) Publication number: **0 037 860**
**A2**

(12) **EUROPEAN PATENT APPLICATION**

(21) Application number: **80200515.7**

(22) Date of filing: **03.06.80**

(51) Int. Cl.³: **C 08 J 11/04,** C 08 J 9/00,
C 08 K 7/04
// C08L75/04

(30) Priority: **18.02.80 BE 58410**

(71) Applicant: **ISOMO personenvennootschap met beperkte aansprakelijkheid, Wittestraat 1, B-8710 Kortrijk (BE)**

(43) Date of publication of application: **21.10.81**
**Bulletin 81/42**

(72) Inventor: **Vereecke, Paul Jean, Wittestraat 3, B-8710 Kortrijk (BE)**

(84) Designated Contracting States: **AT CH DE FR GB IT LI LU NL SE**

(74) Representative: **Bockstael, Daniel, M.F.J. Bockstael Arenbergstraat 13, B-2000 Anvers (BE)**

(54) **Process for recovering waste products of glass fibres, rock wool, and polyurethane hard foam; end products obtained through this process.**

(57) Process for recovering waste products of glass fibres, rock wool and polyurethane hard foam, characterized in that it mainly consists in grinding waste products of glass fibres and/or rock wool and/or polyurethane hard foam; spraying and mixing the so ground waste products with an isocyanate or phenolic resin and then compressing and heating the impregnated waste in order to obtain a plate with a specific weight comprised between approximately 300 and approximately 800 kg/m.

EP 0 037 860 A2

1

Process for recovering waste products of glas fibres, rock wool, and polyurethane hard foam; end products obtained through this process"

The present invention relates to a process for recovering waste products of glas fibres, rock wool, polyurethane hard foam and similar products.

Insulation panels are mostly manufactured in a continuous process, for instance by spraying a foam mixture between two covering layers of paper, cardboard, aluminium foil or similar materials. After the foam has hardened, the irregular edges of the strip obtained in this manner require to be cut straight. That represents a waste of 1 to 1,25% of the total processed volume. The carrying away and destruction of this waste become increasingly expensive, especially due to the protection of the environment.

The purpose of the invention is therefore to provide a solution for this problem. For this reason, there is propounded a process which mainly consists of: grinding waste of glass fibres and/or rock wool and/or polyurethane hard foam, spraying and mixing the so ground waste with an isocyanate or a phenolic resin and then compressing and heating the impregnated waste in order to obtain a plate with a specific weight comprised between approximately 300 and approximately 800 $kg/m^3$.

Polyurethane hard foam is ground to a granulometry of maximum $1 cm^3$. The binder is added in the proportion of 3 to 6% in weight.

The compression preferably takes place under a pressure of 15-20 kg/cm$^2$, the temperature being maintained at 190°-210°C, during a time which depends on the desired thickness of the end product (for instance, three minutes for a 10 mm thick plate).

Plates obtained by this process with mainly polyurethane hard foam as a raw material have been tested with the following results :

Plate thickness 10 mm.

A. Weight per volume (kg/m$^3$).

| | |
|---|---|
| 1 | 594 |
| 2 | 624 |
| 3 | 635 |
| 4 | 640 |
| 5 | 588 |
| 6 | 579 |
| 7 | 581 |
| 8 | 584 |
| 9 | 581 |
| 10 | 567 |
| Average | 597 |

B. Moisture content (%).

| | |
|---|---|
| 1 | 2,62 |
| 2 | 2,45 |
| 3 | 2,43 |
| 4 | 2,37 |
| 5 | 2,56 |
| 6 | 2,51 |
| 7 | 2,55 |
| 8 | 2,51 |
| 9 | 2,56 |
| 10 | 2,68 |
| Average | 2,52 |

C. <u>Water absorption (%)</u>.

|  | after 2 hours | after 24 hours |
|---|---|---|
| 1 | 5,0 | 13,4 |
| 2 | 4,1 | 11,5 |
| 3 | 4,0 | 11,4 |
| 4 | 4,0 | 10,2 |
| 5 | 4,8 | 14,5 |
| 6 | 4,6 | 12,1 |
| 7 | 4,9 | 14,0 |
| 8 | 4,6 | 12,9 |
| 9 | 4,6 | 14,0 |
| 10 | 5,4 | 16,0 |
| Average | 4,6 | 13,0 |

D. <u>Static bending strength</u> ($kg/cm^2$).

| 1 | 226 |
|---|---|
| 2 | 233 |
| 3 | 184 |
| 4 | 196 |
| 5 | 245 |
| 6 | 202 |
| Average | 214 |

E. <u>Variation of the dimensions through immersion (%)</u>.

|  | <u>Length</u> | | <u>Thickness</u> | |
|---|---|---|---|---|
|  | after 2 hours | after 24 hours | after 2 hours | after 24 hours |
| 1 | 0,30 | 0,45 | 1,91 | 3,11 |
| 2 | 0,20 | 0,25 | 2,31 | 2,61 |
| 3 | 0,10 | 0,30 | 1,89 | 3,48 |
| 4 | 0,10 | 0,30 | 1,19 | 2,68 |
| 5 | 0,10 | 0,30 | 1,76 | 3,80 |
| 6 | 0,20 | 0,40 | 1,15 | 2,67 |
| 7 | 0,10 | 0,20 | 1,36 | 2,82 |
| 8 | 0,10 | 0,35 | 1,15 | 2,78 |
| 9 | 0,10 | 0,20 | 1,16 | 2,91 |
| 10 | 0,25 | 0,40 | 1,69 | 3,05 |
| Average | 0,16 | 0,32 | 1,56 | 2,99 |

0037860

Plate thickness 18 mm.

A. Weight per volume $(kg/m^3)$.

| | |
|---|---|
| 1 | 686 |
| 2 | 689 |
| 3 | 692 |
| 4 | 707 |
| 5 | 702 |
| 6 | 668 |
| 7 | 667 |
| 8 | 687 |
| 9 | 698 |
| 10 | 693 |
| Average | 689 |

B. Moisture content (%).

| | |
|---|---|
| 1 | 2,67 |
| 2 | 2,53 |
| 3 | 2,48 |
| 4 | 2,59 |
| 5 | 2,73 |
| 6 | 2,85 |
| 7 | 2,73 |
| 8 | 2,41 |
| 9 | 2,50 |
| 10 | 2,45 |
| Average | 2,59 |

C. Water absorption (%).

| | after 2 hours | after 24 hours | after saturation |
|---|---|---|---|
| 1 | 22,8 | 46,8 | 59,1 |
| 2 | 29,8 | 49,7 | 59,3 |
| 3 | 28,1 | 48,9 | 61,7 |
| 4 | 28,2 | 48,2 | 58,3 |
| 5 | 27,6 | 48,0 | 53,0 |
| 6 | 34,9 | 52,7 | 63,1 |
| 7 | 25,9 | 49,8 | 60,3 |
| 8 | 29,3 | 50,6 | 58,9 |

|    |      |      |      |
|----|------|------|------|
| 9  | 27,8 | 49,0 | 54,1 |
| 10 | 28,8 | 49,1 | 53,4 |
| Average |   | 49,3 | 58,1 |

D. Static bending-strength ($kg/cm^2$).

- in natural condition

|         |     |
|---------|-----|
| 1       | 165 |
| 2       | 167 |
| 3       | 184 |
| 4       | 178 |
| 5       | 174 |
| 6       | 152 |
| Average | 170 |

- after saturation

|         |     |
|---------|-----|
| 1       | 110 |
| 2       | 112 |
| 3       | 111 |
| 4       | 111 |
| 5       | 110 |
| 6       | 106 |
| Average | 110 |

E. Variation of the dimensions (%).

|         | Length | | Thickness | |
|---------|---------------|----------------|---------------|----------------|
|         | after 2 hours | after 24 hours | after 2 hours | after 24 hours |
| 1       | 0,50 | 0,75 | 4,41 | 8,10 |
| 2       | 0,35 | 0,60 | 5,62 | 8,62 |
| 3       | 0,30 | 0,40 | 5,41 | 8,28 |
| 4       | 0,30 | 0,41 | 5,56 | 8,17 |
| 5       | 0,20 | 0,55 | 5,74 | 8,11 |
| 6       | 0,30 | 0,40 | 6,26 | 7,90 |
| 7       | 0,20 | 0,45 | 5,03 | 7,75 |
| 8       | 0,20 | 0,45 | 6,12 | 8,00 |
| 9       | 0,20 | 0,40 | 5,59 | 7,60 |
| 10      | 0,40 | 0,55 | 5,99 | 8,04 |
| average | 0,30 | 0,50 | 5,57 | 8,06 |

Plate thickness 20 mm.

A. Weight per volume (kg/m$^3$).

| | |
|---|---|
| 1 | 525 |
| 2 | 531 |
| 3 | 534 |
| 4 | 543 |
| 5 | 543 |
| 6 | 525 |
| 7 | 519 |
| 8 | 509 |
| 9 | 507 |
| 10 | 525 |
| Average | 526 |

B. Moisture content (%).

| | |
|---|---|
| 1 | 3,02 |
| 2 | 2,87 |
| 3 | 2,98 |
| 4 | 3,14 |
| 5 | 2,77 |
| 6 | 3,12 |
| 7 | 2,78 |
| 8 | 2,91 |
| 9 | 2,80 |
| 10 | 2,71 |
| Average | 2,91 |

C. Water absorption (%).

| | | |
|---|---|---|
| 1 | 33,9 | 67,9 |
| 2 | 38,2 | 71,6 |
| 3 | 41,9 | 72,6 |
| 4 | 40,5 | 71,5 |
| 5 | 36,1 | 67,7 |
| 6 | 29,7 | 68,6 |
| 7 | 31,0 | 69,0 |
| 8 | 31,3 | 71,9 |
| 9 | 36,7 | 75,2 |

| | | |
|---|---|---|
| 10 | 28,9 | 70,7 |
| Average | after 2 hours | after 24 hours |
| | 34,8 | 70,7 |

D. Static bending-strength ($kg/cm^2$)

| | |
|---|---|
| 1 | 138 |
| 2 | 122 |
| 3 | 125 |
| 4 | 136 |
| 5 | 147 |
| 6 | 153 |
| Average | 137 |

E. Variation of the dimensions through immersion (%)

| | Length | | Thickness | |
|---|---|---|---|---|
| | after 2 hours | after 24 hours | after 2 hours | after 24 hours |
| 1 | 0,30 | 0,30 | 3,02 | 4,93 |
| 2 | 0,25 | 0,25 | 3,71 | 5,06 |
| 3 | 0,35 | 0,40 | 3,61 | 4,72 |
| 4 | 0,25 | 0,30 | 3,66 | 4,67 |
| 5 | 0,10 | 0,20 | 3,80 | 4,90 |
| 6 | 0,30 | 0,35 | 3,31 | 4,94 |
| 7 | 0,10 | 0,15 | 3,43 | 4,83 |
| 8 | 0,25 | 0,30 | 3,42 | 5,16 |
| 9 | 0,30 | 0,50 | 3,28 | 4,34 |
| 10 | 0,35 | 0,40 | 2,94 | 4,63 |
| Average | 0,26 | 0,32 | 3,42 | 4,82 |

An investigation on mildew (Aspergillus) has given a positive result on the three thicknesses, that is to say a result that is better than on a conventional wood fibre plate.

Plates according to the invention can be used for many applications. If polyurethane hard foam is the main constituent, the plates may be used, for instance, for lost packings or, for special applications, for instance plates made from agglomerated chips.

If the plates are mainly made from glass fibres and/or rock wool, the applications to be taken into consideration are mostly acoustic ones.

1                    0037860

Claims.

1.- Process for recovering waste products of glass fibres, rock wool and polyurethane hard foam, characterized in that it mainly consists in grinding waste of glass fibres and/or rock wool and/or polyurethane hard foam; spraying and mixing the so ground waste with an isocyanate or phenolic resin and then compressing and heating the impregnated waste in order to obtain a plate with a specific weight comprised between approximately 300 and approximately 800 $kg/m^3$.

2.- Process according to claim 1, characterized in that, in the case of polyurethane hard foam, the waste is ground to a granulometry of maximum 1 $cm^3$.

3.- Process according to claim 1, characterized in that the binder is added in the proportion of 3 to 6 percent in weight.

4.- Process according to claim 1, characterized in that the compression takes place under a pressure of 15 to 20 $kg/cm^2$.

5.- Process according to claim 1, characterized in that the compressed mass is maintained at a temperature of 190 to 210°C during the compression.

6.- Plate produced by applying a process according to one or more of the claims 1 through 5.